# EUROPEAN PATENT SPECIFICATION

(11) **EP 2 348 216 B1**
(45) Date of publication and mention of the grant of the patent: **15.10.2014**
(21) Application number: 11152147.2
(22) Date of filing: 25.01.2011
(51) Int. Cl.: F03D 3/06, F03B 3/12

(54) **Turbine for wind and water power plants**
Turbine für Wind- und Wasserkraftanlagen
Turbine pour éoliennes et centrales hydrauliques

(30) Priority: 26.01.2010 EP 10151707
(43) Date of publication of application: 27.07.2011
(73) Proprietor: Kunz, Georg, 88339 Bad Waldsee (DE); Juhanak, Jiri, Windhoek (NA); Schwendler, Franz, 8463 Leutschach (AT)
(72) Inventor: Kunz, Georg, 88339 Bad Waldsee (DE); Juhanak, Jiri, Windhoek (NA); Schwendler, Franz, 8463 Leutschach (AT)
(74) Representative: Winter, Brandl, Fürniss, Hübner, Röss, Kaiser, Polte - Partnerschaft mbB

(56) References cited:
- EP-A1- 2 143 940
- DE-A1- 3 439 759
- DE-A1-102004 053 477
- FR-A- 910 581
- US-A- 4 382 190
- US-A- 4 566 854

## Description

This invention relates to turbines which are able, by means of an unconventional utilization of drag and lift forces, to operate in either air or a water streams, and their various use for generating electrical or mechanical energy.

A wind turbine converts the energy of wind into kinetic energy. There are only two known ways of harvesting wind energy by means of use of the blades exposed to wind pressure a) blades rotating in a vertical plane, b) blades rotating in a horizontal plane, the former being more common. Horizontal - axis wind turbines have the main rotor shaft and electrical generator at the top of a tower, and must be pointed into the wind. Vertical axis wind turbines have the main rotor shaft arranged vertically.

DE 10 2004 053 477 A1 discloses a vertical axis wind turbine including an aerofoil. Another vertical axis turbine, disclosed in DE 34 39 759 A1 discloses a fluid guide element to guide the wind in a suitable direction for generation of a rotational movement.

A conventional, normal wind turbine consists of a rotor with rotor blades and a hub on which the rotor blades are fixed. The hub is connected with a shaft which is connected to a gear box, which is designed to power the generator. The rotor blades respectively the wings can show a profile like an aerofoil. The air flow around an aerofoil has the effect of creating an upwards lift force that keeps the blade up in the air, and a backwards drag force that has the effect of slowing the speed of the blade down. Drag forces act in a direction opposite to the oncoming flow velocity. Lift will commonly defined as to be the component of this force that is perpendicular to the oncoming flow direction.

In both of these conventional cases a certain practical and theoretical problem regarding efficient harvesting of wind energy occurs. The main problem seems to be an assumption that a rotor blade or an aerofoil can fulfil two completely different functions at the same time, namely the one with an element utilizing drag forces - (pressure) - and the other with element utilizing the lift force - (suction) -.

Also the different wind velocities due to the variation in altitude upcoming from the size of the diameter of the propeller and the fact that the blades of the rotor do rotate with different peripheral velocities, contribute to a conjecture that no aerodynamic solution for efficient harvesting of wind energy can be found in conventional approach.

The present approach towards the construction of wind energy converters also does not offer any reasonable solution which would in a way help to create a combined lift force acting in desired direction thus generating an optimal torque.

Therefore, the object of the present invention is to provide a rotor which allows a more efficient harvest fluid stream energy and especially of wind energy.

This object is achieved by a rotor according to the features of claim 1. Preferred embodiments of the rotor according to the invention have been specified in the dependent claims.

According to the invention a rotor, in particular for wind energy plants comprise at least two rotor blades with a common hub. Preferable, the rotor comprises three rotor blades. Moreover, the rotor comprises at least two flow elements having a connection with the common hub and/or with at least one rotor blade. It is possible to fix the flow elements directly to the hub respectively to the rotor blade. However, it is also possible to fix them at the change-over from the rotor blades to the hub. The flow elements of the rotor are designed as hollow parts, whereas these hollow parts show at least one opening, which is opposed to the direction of rotation using the drag. This embodiment of the flow elements leads to the advantage that the surface of the opening increases. This will increase the shear force.

The rotor is characterised in that in the inside of the hollow flow elements fluid guide elements are provided. Firstly, it is possible to fix fluid guide elements very easily and cheap at the inner surface of the opening. Secondly, the installation of the fluid guide elements leads to the advantage that the working or effective surface of the flow elements will be increased.

In a preferred embodiment, flow elements with fluid guide elements are configured such that an incident flow of at least one side of the flow element which is opposed to the rotational direction creates a shear force in the direction of rotation oft the rotor. The configuration of the flow elements leads to the advantage that the effectiveness of the rotor will be increased. Assuming a rotational symmetric design of the rotor and the rotor blades the configuration of the flow elements allows to use the wind energy when the side of the flow element which is opposed to the rotational direction will be blown by a fluid. Especially this portion of wind energy will be lost during the use of already known rotors, wherefore the present invention leads to a significant increase of effectiveness. In this context, it is also possible to name the shear force as a drag force.

In a further preferred embodiment of this invention hollow parts of the flow elements are preferably configured as cones or cylinders or bullets or u-shaped. Despite these forms, every other appropriate form, which leads to a comparable aerodynamic effect, is also possible. Especially these forms show an advantageous flow characteristic in the direction of rotation. Moreover it is possible to provide especially these shaped flow elements with appropriate openings.

In a preferable embodiment of the rotor, the fluid guide elements are strip-shaped and are arranged like a louver along a straight orientation line. The orientation line intersects the direction of rotation and the symmetry axle of the flow element with an acute angle. The symmetry axle is in particular in line with the moving direction of the flow element, in case of a rotating circle nearly as a tangent. This acute angle is preferable 22.5 degree. The wind pressure is utilized in most effective way, when arranging the fluid guide elements in angle of 45 degree with the symmetric axle of the flow element. All in all this leads to an increasing effectiveness.

Preferably, two rows of louver-like fluid guide elements are mounted inside the flow elements. The orientation lines of said two rows form an angle of 45 degrees, the tip of said angle pointing into the direction of movement or rotation of the flow elements.

In a preferred embodiment the strip-shaped fluid guide elements are curved like a sail or an aircraft wing to provide a lift force in direction of rotation.

To optimize the resulting circulating speed and torque of the flow elements the flow elements are mounted on the rotor blades towards their free ends. It is possible to fix them or place them free movable respectively flexible. In case the flow elements will be fixed free movable or flexible, it means, that the flow elements have two degrees of freedom and therefore can rotate around a central point.

To increase the effectiveness of the rotor, it is in particular appropriate to arrange at least one airfoil at least one rotor blade. It is needless to say that it is possible to alternate the arrangement of flow elements and airfoils in a way that a rotor blade show a flow element or alternatively an airfoil.

In a preferred embodiment the airfoils are basically parallel to an axis of symmetry of the hub. The airfoils are preferable configured such that an incident flow of an airfoil with a fluid a lift force will be created in the direction of rotation of the rotor. This leads also to an increasing effectiveness of the rotor.

In general, the rotor in accordance with the present invention can also be arranged with additional rotors, for example in a series. Moreover it is also possible to connect one airfoil with two rotor blades, each comprised by a separated rotor in order to create a connection between them.

In a preferred embodiment of the rotor the shape of at least one rotor blade, in particular in axial direction, is curved. The length of the rotor blades is in a preferred embodiment adjustable. These embodiments lead to the advantage that torque and the speed of rotation can be controlled in a very ease way. The adjustable arms allow control of the circulating speed of inner and outer elements thus compensating wind flow fluctuation. The so called optimal wing tip speed can therefore be achieved at much lower wind velocities.

Furthermore, it is preferable that the rotor is rotationally symmetric. This leads to the advantage that unbalanced masses can be avoided.

Further areas of applicability of the present invention will become apparent from the detailed description provided hereinafter. It should be understood that the detailed description an specific examples, while indicating preferred embodiments of the invention, are intended for purpose of illustration only but not closing.
Figure 1: balance of power (state of the art)
Figure 2: balance of power (present invention)
Figure 3: cross section of a flow element
Figure 4: configuration of the planes
Figure 5: rotor configuration with flow elements
Figure 6: rotor configuration with flow elements in connection with a stroke pump
Figure 7: air foils working diagramm
Figure 8: rotor configuration with flow elements, airfoils in connection with a stroke pump (side view)
Figure 9: rotor configuration with flow elements, airfoils in connection with a stroke pump (top view)

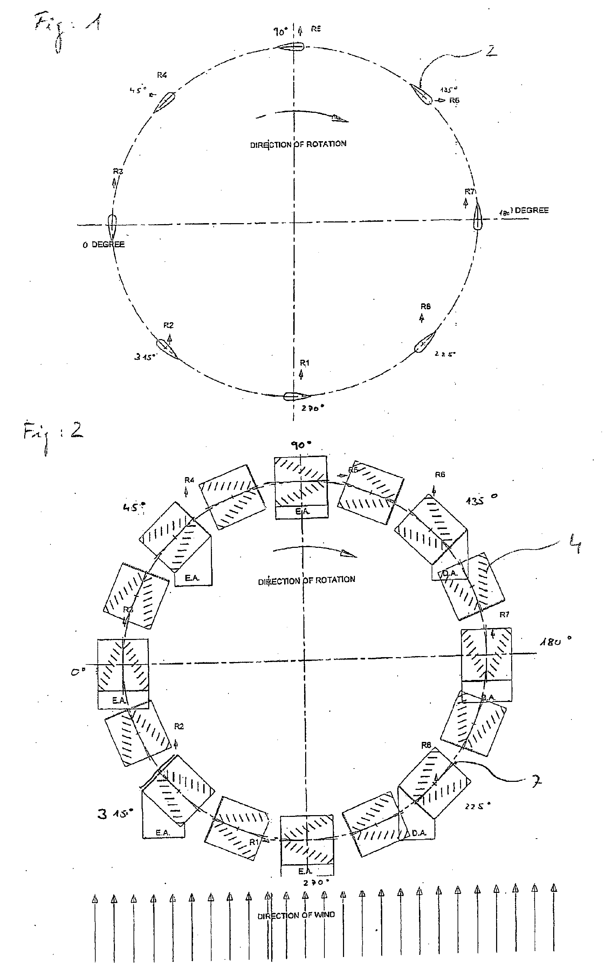

Figure 1 show the rotation of a conventional blade with the shape of a rotor blade 2. This example and the following conclusions refer especially to horizontal axis wind turbines. Nevertheless, these conclusions apply likewise to vertical axis wind turbines or any other kind of rotor 1, rotor blades 2 and used airfoils 9in accordance with this invention.

Figure 1 show 8 positions of a rotor blade 2 (cross sectional figuration) and the different flow conditions during the clockwise rotation of the rotor blade 2. The basis of the following consideration is that the wind direction is constant and blows against the rear sharp edge, which is opposed to the rotation direction, of the rotor blade 2 in position 0 degree.

It can be seen from the starting point at 0 degree, that nearly no wind pressure can be exploited for forward movement, as only the sharp edge of the profile's tail faces the wind. At position 45 degree, which equals forty five degree interval, one eighth of the full circle, creates a blade 2, which is perpendicularly fixed to the axis of rotation 10, negative angle of adjustment and is effectively pushed in opposite direction of the desired motion. At ninety degree interval, one quarter of the circle, the full thickness of the rotor blade 2 is exposed towards the air flow and is contribution towards the rotation can be described as controversial. At one hundred and thirty five degree interval, three eighth of the circle, a negative angle of adjustment for drag forces is created and the rotor blade 2 is pushed by the air stream in opposite direction. At one hundred and eighty degree interval, half of the circle, the rotor blade 2 is facing wind with its full width and no contribution towards forward motion is generated, except at higher speeds when lift forces cancelling each other are induced and only a relatively small equivalent is transformed into forward motion. At two hundred and twenty five degree interval, five eight of the circle, positive angle of adjustment for drag forces is crated and the blade is pushed by the air stream in positive direction of motion. At two hundred and seventy degree interval, three quarters of the circle, the full thickness of the rotor blade 2 is again exposed towards the airflow. At three hundred and fifteen degree interval, seven eighth of the circle, negative angle of adjustment for drag force is created and the rotor blade 2 is pushed backwards.

The resulting forces can be calculated as follows:
0° position to wind direction R3 resulting force +F = exposed area of foil x 1/2 qxv²x2
45° position to wind direction R4 resulting force -F = exposed area of foil x 1/2 qxv²x2
90° position to wind direction R5 resulting force 0 = exposed area of foil x 1/2 qxv²x2
135° position to wind direction R6 resulting force -F = exposed area of foil x 1/2 qxv²x2
180° position to wind direction R7 resulting force -F = exposed area of foil x 1/2 qxv²x2
225° position to wind direction R8 resulting force +F = exposed area of foil x 1/2 qxv²x2
270° position to wind direction R1 resulting force 0 = exposed area of foil x 1/2 qxv²x2
315° position to wind direction R2 resulting force -F = exposed area of foil x 1/2 qxv²x2

For construction of an efficient rotor 1 and therefore wind turbine or wind energy converter will therefore be necessary to distinguish between drag (pressure) and lift force (suction) and develop suitable elements able to utilize these two fundamentally different forces naturally generated by the wind or an air stream. These forces are also induced and act upon elements once these move through a media such as air or water. This is due to the fact, that the medium of wind an water is similar in their nature, can be therefore both employed, exploited respectively engaged in power generating by using the method described in this invention.

An element utilizing the direct pressure of an air stream or wind will in this invention be defined as flow element 4. In some cases, these elements can also be defined as a drive element.

Assuming a rotational symmetric design of the rotor 1 there is at least one area where mainly the sharp edge of the blade is in the flow of the oncoming fluid. As stated above, in this area nearly no wind pressure can be exploited for forward movement when flowing the sharp edge of a rotor blade 2 respectively airfoil.

Based on this fact, the main finding of the current invention is, that the use of an additional element, called flow element 4, allows the additional use of the wind energy especially in this area. The incident flow of at least one side of the flow element 4 in such an area, which is opposed to the rotational direction, creates a shear force in the direction of rotation of the rotor 1. Therefore, the additional shear force can be used for increasing the effectiveness of the rotor 1. The flow element is specially designed and constructed to utilize drag / shear force. Its main function is to drive an asymmetrical foil situated an a curved lever arm / rotor blade and its purpose is to generate optimum torque.

From the working diagram in figure 2 it can be clearly seen that the resulting forces and velocities are much higher then forces and speeds of an equal surfaces commonly used. It can be seen from the starting point at 0 degree, that significant more wind pressure can be exploited for forward movement, at position 45 degree, and 90 degree a positive shear force can be exploited in the rotating direction. This finding applies likewise for the position at 270 degree and 315 degree. Comparing the resulting forces in figure 1 with the resulting forces in figure 2 it is obviously clear, that there is a significant increase of the utilization of wind energy. This is due to the fact that a propulsion of nearly 270 degree is utilized. The effectiveness increases about by a factor 2.It is therefore important that the side of the segments are fully exposed to the wind and not overshadowed by segments inserted at the same level.

The resulting forces can be calculated as follows:
0° position to wind direction R3 resulting force +F = exposed area of flow element x 1/2 qxv²x2
45° position to wind direction R4 resulting force +F = exposed area of flow element x 1/2 qxv²x2
90° position to wind direction R5 resulting force +F = exposed area of flow element x 1/2 qxv²
135° position to wind direction R6 resulting force 0 = exposed area of flow element x 1/2 qxv²x2
180° position to wind direction R7 resulting force +F = exposed area of flow element x 1/2 qxv²x2
225° position to wind direction R8 resulting force -F = exposed area of flow element x 1/2 qxv²x0,2
270° position to wind direction R1 resulting force -F = exposed area of flow element x 1/2 qxv²x0,2
315° position to wind direction R2 resulting force -F = exposed area of flow element x 1/2 qxv²x0,2

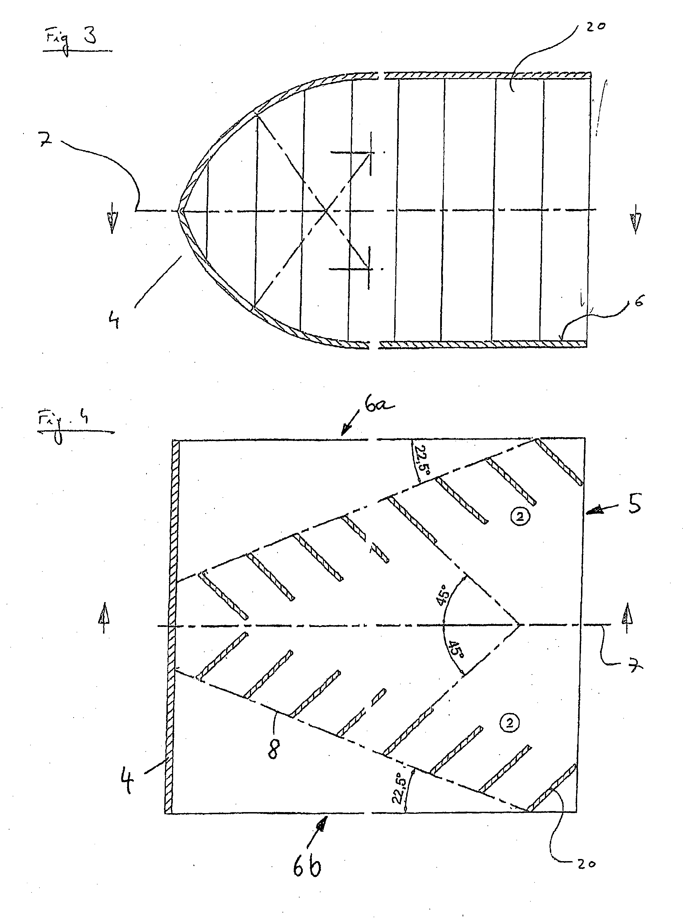

Figure 3 shows a cross section of the flow elements 4 in a plane parallel to the axis of rotation 10 and Figure 4 shows a cross section in radial direction of the rotor blades 2. The cross section of flow element 4 in Figure 3 is U-shaped. Despite this form, every other appropriate form, which leads to a comparable aerodynamic effect, is also possible. The flow element 4 is designed as a hollow part with one opening 5, which is opposed to the direction of rotation and two opposite side openings 6a and 6b in radial direction of the rotor blades 2. The front faces of the flow elements are shaped aerodynamically thus reducing resistance on their return to wind.

To maximize the inner surface in order to increase the resulting force, two rows of louver-like arranged fluid guide elements 20 are mounted inside of the hollow flow elements 4 - Fig. 4. Each row of fluid guide elements 20 is arranged along a straight orientation line 8. The two orientation lines 8 form an angle of 45 degrees with the tip of the angle pointing in the direction of rotation. Each orientation line intersects the symmetry axis 7 with an angle of 22.5 degrees. The strip-shaped elements 20 are arranged in angle of 45 degrees with respect to the symmetry axis 7, i. e. symmetric with respect to the symmetry axis 7. Depending on the orientation of the flow elements along the circle of rotation the driving wind may enter via the opening 5 and escape via the side openings 6a and 6b or vice versa. To increase the effectiveness the fluid guide elements 20 may be curved - not shown - to act like a sail.

The flow element 4 preferably comprises a plurality of fluid guide elements 20 arranged in such way that each of the fluid guide elements 20 is fully exposed to the wind at any given time. The arrangement may recreate an image of a Christmas tree, the only difference being the arrangement of branches. However, the number of flow fluid guide elements 20 depends on the size of the flow element 4 respectively the available inner space.

Other than with Christmas tree, where a couple of branches grow at a same level, the flow elements 4 are placed individually at own levels thus avoiding overshadowing of each other. The size, the number of flow elements 4 and the length of arms on which the flow elements 4 are attached to a rotating hub or rotor blade 2 depend on the resistance of the rotor blade 2 that needs to be overcome so the air foils 9 would gain necessary speed and begin to create aerodynamic uplift.

The fluid guide elements 20 are preferably formed from flat or curved sheets. The flow elements 4 can be made from different durable and weather resistant materials such as UV-resistant plastics or either alloy metal or galvanized sheeting. The flow elements 4 can be placed at the free ends of the rotor blades 2. It is possible to fix them or place them free movable respectively flexible.

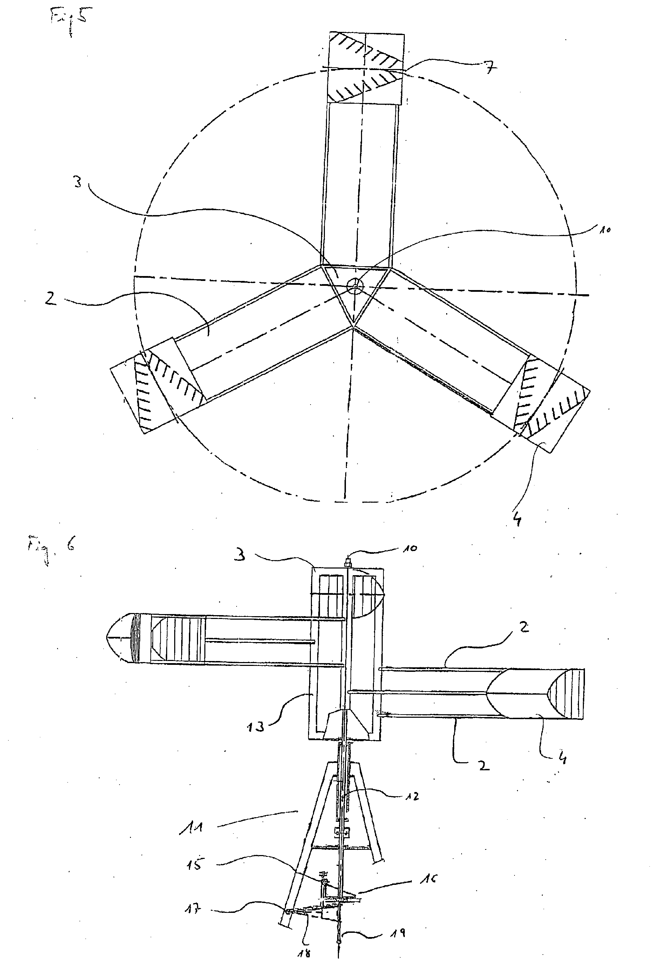

Figure 5 show a rotor 1 with three rotor blades 2 each comprising flow elements 4. The rotor blades 2 themselves are adjustable. This means that the length of the rotor blade 2 is variable like a telescope.

Figure 6 show a rotor 1 operating a stroke pump 11. This could be an appropriate field of application. The rotor 1 comprises a drive shaft 12, a rotating cage 13 and a plurality of adjustable arms which are called rotor blades 2. The rotor blades 2 comprise a plurality of flow elements.4.- which are designed and built in accordance with aerodynamic principles as to utilize pressure of air or water stream to produce rotational force in order to drive a rotating stroke mechanism 14. Moreover, the rotor 1 is connected with the stroke pump 11. The rotor blades in accordance with figure 6 are configured in two layers. In any case, single layer or multiple layer arrangements are possible (e.g. vertical or horizontal).

The vertical or horizontal flow elements 4 have a cover member with reduced resistance due to their moving into direction of a stream of wind, operating through rotational motion a rotating wedge 16 attached to the bottom of drive shaft 12 to which the rotating cage 13 with flow elements 4 is fitted. By means of suspending a guide wheel 15 over the edge of the rotating wedge 16, a vertical up and down motion is created, once the wedge 16 turns, and, by help of arrangements of hinges 17 and lever arms 18 is this motion transmitted to pumping rods 19 operating a submerged stroke cylinder, operating an single or multiple arrangements of either flow elements 4 on straight or curved adjustable rotor blades for those purpose of driving a stroke mechanism 14.

When a wind force is applied to the flow elements 4 and the rotor cage 13 begins to rotate and the curved barrel part - rotating wedge 16 - suspended at the bottom of a drive shaft 12 begins to run. The sidewise fixed guide wheel 15 follows an up and down movement determined by the vertically curved profile of the rotating wedge 16, lifts and lowers the one end hinged lever arm 18 to which, at an optimum distance and closest to the centre of the bore hole, pumping rods 19 of the stroke pump 11 are connected. The gradient of the curved cylinder is moderate during the climbing period of the lever.

The present invention furthermore allows control of circulating speed. Speed of a rotor 1 is controlled by length of rotor blades 2 to which the flow elements 4 are fixed. The torque could be regulated by the net area of the flow elements 4 being exposed to the wind at any given time. The drag areas causing resistance are deducted. In the case of a stroke pump 11, there is also a need to avoid so called choking of pump cylinder when certain velocity is exceeded. This invention allows, by means of adjustable length of the arms, the control of the revolution. Moreover, it is possible to configure the rotor 1 shown in figure 6 with additional rotor blades 2 and airfoils 9. Alternatively, additional airfoils 9 can also be placed at the existent rotor blades 2.

To control the position of the flow elements 4, it is possible to fix them free movable at the rotor blades 2. This could be realised with help of electrical actuators in more sophisticated versions of wind turbines, or by a speed governors which, due on the way to centrifugal forces are used to pull tubular arms to an extent and a preset weight or spring pull back once the excessive forces resign.

The rotor blades 2 can show different profiles. In figure 6 the rotor blades are merely plane blades. However it is also possible that the rotor blades show all known profiles like wings, airfoils etc..

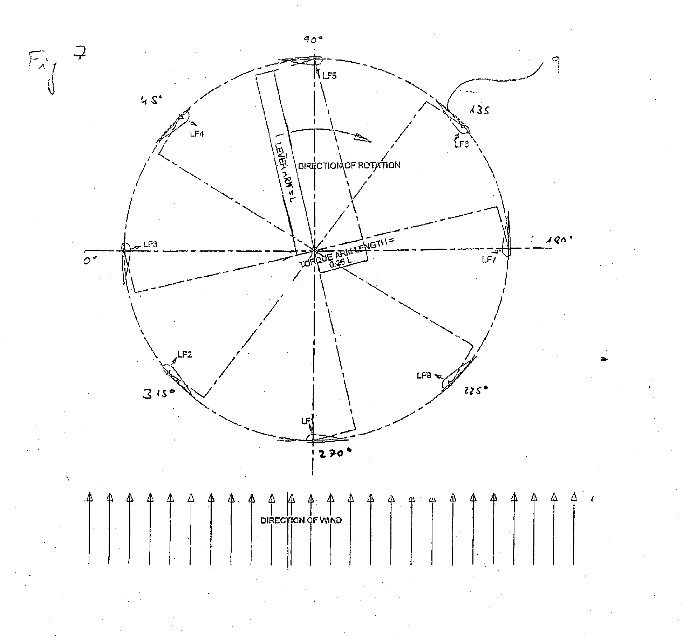

To increase the effectiveness of the rotor 1, it is in particular appropriate to arrange at least one airfoil 9 on at least one rotor blade 2 causing a lift force in direction of rotation. Figure 7 show the mode of operation of an airfoil 9 of the present invention. The airfoil 9 is an element, utilizing aerodynamic lift effect of laminar stream known as Bernoulli's Law, which could also be defined as driven element. An airfoil 9 will be understood as a wing or a blade - which uplift - lift force - is, through profiling and positioning, utilized in such a way that the lift of an airfoil 9 generates reasonable torque and contributes to the forwards motion of a rotor 1. Therefore, the improved lift leads to an increasing torque.

The airfoil 9 in this invention will be understood as a wing with aerodynamic profile not only creating perpendicular uplift force but an uplift force which resultant vector is inclined towards the front edge of the airfoil 9, thus enabling to create not only an upwards, but also a forwards pull. The lift force can be increased by using flaps or slats on the airfoils. In a preferred embodiment the airfoils are of asymmetric construction, with its lift force acting in the direction of rotation. In some cases the airfoils will be driven by flow elements or by other means.

Common knowledge of aerodynamics states that an airfoil's resistance coefficient value is approximately around 0.2. The lift coefficient value around 1.0. It means that a force need to overcome the aerodynamic resistance of a profile and to create corresponding lift force is only a fifth of the uplift force created. Theoretically it could be said, an airfoil 9 is able to generate an uplift force five times bigger than the resistant force needed for its forwards movement or travel.

The working diagram in figure 7 of an asymmetrical airfoil 9 demonstrates that asymmetrical air profile is able to generate more torque than its symmetrical counterpart. Therefore an ideal asymmetrical airfoil 9, as described in this invention will generate much grater lift force then the conventionally used profiles. The torque generated by the asymmetrical airfoil 9, compared to a symmetrical airfoil 9 behaves as the tangent of fifteen degree divided by tangent of ten degree, one and half times more. This asymmetrical airfoil 9 of this invention becomes fifty two percent more efficient, and will not have to circulate at velocities close to the speed of sound.

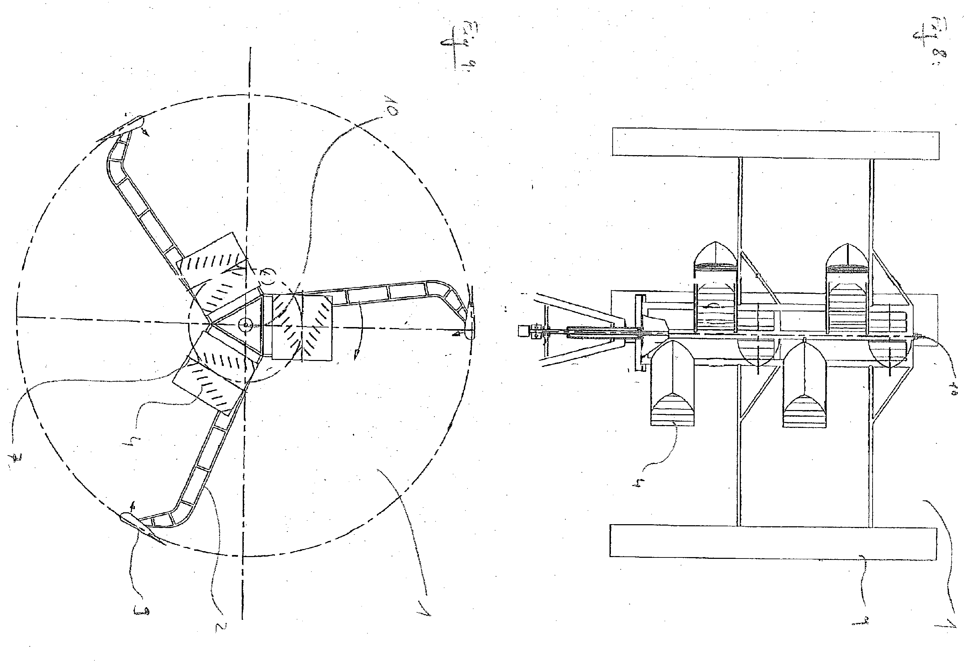

A typical arrangement for a wind turbine rotating in horizontal plane with functionally determined elements is described in figures 8 and 9. This configuration shows one possibility to clarify the further advantage of this invention to distinguish between drag and lift forces and a full utilization of these two different functions in power generation.

A rotor 1 comprising a drive shaft and rotating cage 13 a plurality of adjustable rotor blades 2 operating a plurality air foils and flow elements 4 which are designed and built in accordance with aerodynamic principles as to utilize pressure of air or water stream to produce rotational force. The horizontally arranged airfoils 9, orbiting on outer spheres, are designed and built in accordance with aerodynamic principles of suction as to utilize lift force of air or water stream in such a way that the resultant vectors act in desirable direction and produce reasonable amount of torque, operating an single or multiple arrangements on straight or curved adjustable rotor blades 2.

In order to generate optimal torque it is essential that these airfoils 9 are not fitted on straight rotor blades 2 to a rotator shaft 12 as the standard practice is, but on arms specially formed to create optimum leverage to ease a start up face and to smooth the generating of the torque itself. A preferred embodiment of the rotor 1 shows rotor blades 2 with a curved form. The curve itself depends on the field of application wherefore all forms are possible which are in accordance with the aerodynamic principles of the present invention. In this invention, the curved tops of airfoils 9 do face inwards of the rotating circle, then by doing so a positive torque is generated.

The airfoils 9 are basically parallel to an axis of symmetry of the hub 10. The rotors 1 can for example be connected in a series. Moreover it is also possible to connect one airfoil 9 with two rotor blades 2, each comprised by a separated rotor in order to create a connection between them. Moreover it is possible to combine several rotors 1 of similar or different kinds.

The supporting tower carrying main shaft 12 to which a rotating cage 13 is mounted through bearings housing pipe and bearings the shaft 12 being supported and housing and thrust bearing. To the rotating cage 13 are fitted adjustable rotor blades 2 carrying drive rotor segments and as well as airfoils 9 in single or multiple arrangements. The function of the drive rotor segments is to allow the outer air foils to circulate at desirable velocity and generate sufficient torque which is then drawn thorough power off take to a generator or can be used to drive any mechanism or to propel boats or land vehicles directly.

The mechanical transmission is protected by an overload release clutch. The rotor cage 13 is fixed to a shaft mounted to a mast fixed to top of a tower. Flow elements 4 are fitted to the rotating cage 13 by means of adjustable rotor blades 2, but these are slightly curved. Down line assembly consists of overload release clutch thrust support and bearings, power take off to generator, which is placed inside a tower.

Circulating speed of a rotor is controlled by length of rotor blades 2 to which flow elements 4 are fixed and the torque is regulated by the net area of segments being exposed to the wind at any given time, where the drag areas are deducted. The control of the adjustable length of the rotor blades 2 carrying the flow elements 4 allows to certain extend the control of revolutions, and the rotor blades 2 length control of rotor blades 2 carrying airfoils 9 allows to a certain degree of the control of the torque.

The adjustments are managed with the help of electrical actuators for bigger turbines or, smaller cases, by speed governors which due to centrifugal forces my spread the tubular arms to an extent and a preset weight or spring would pull back once the excessive forces refrain.

Furthermore, an efficient use of asymmetrical airfoils 9 can be achieved by arranging vertically operating propeller and horizontally mounted air foils. In case of turbine rotating in vertical plane same principle of employing asymmetrical airfoils 9 to increase efficiency can be applied, provided a special attention is paid to the construction and the torque generating airfoils 9 are placed in rather unconventional position, namely parallel to rotating axis and perpendicular to propeller blades.

### Reference symbol list

- 1: rotor
- 2: rotor blade
- 3: hub
- 4: flow element
- 5: back opening
- 6a, 6b: side openings
- 7: symmetry axle of the flow element
- 8: straight orientation line
- 9: airfoil
- 10: axis of rotation
- 11: stroke pump
- 12: drive shaft
- 13: rotating cage
- 15: guide wheel
- 16: rotating wedge
- 17: hinge
- 18: lever arm
- 19: pumping rod
- 20: fluid guide elements

## Claims

1. A rotor (1) for transformation of wind or water power into rotational energy, comprising
- at least two rotor blades (2) connected with one end to a common hub (3) for rotation around an axis of rotation,
- at least two flow elements (4) connected to the common hub (3) and/or to at least one of said rotor blades (2),
- the flow elements (4) being U-shaped, hollow parts having at least one opening (5), which opens opposite to the direction of rotation,
**characterised in that**
- said flow elements (4) have two opposing walls connected at their inner surface to at least one fluid guide element (20), two opposing side openings (6a, 6b) and a closed side pointing into the direction of rotation.

2. A rotor (1) according to claim 1, **characterised in that** a plurality of spaced apart fluid guide elements (20) are provided inside the flow elements (4).

3. A rotor (1) according to claim 1 or 2, **characterised in that** the flow elements (4) are configured such that an incident flow of at least one side of the flow element (4), which is opposed to the rotational direction, creates a shear force in the direction of rotation oft the rotor (1).

4. A rotor (1) according to any preceding claim, **characterised in that** said fluid guide elements (20) are stripe-shaped with first and second end portions, are arranged like a louver along a straight orientation line (8), are mounted to said flow elements (4) with said first and second end portions, and are inclined with respect to the direction of rotation.

5. A rotor (1) according to any preceding claims, **characterised in that** two rows of louver like arranged fluid guide elements (20) are provided, each row having its straight orientation line (8) and said two orientation lines (8) forming an acute angle pointing into the direction of rotation.

6. A rotor (1) according to preceding claim 5, **characterised in that** the two rows of fluid guide elements (20) are arranged symmetric with respect to the direction of rotation.

7. A rotor (1) according to any of preceding claims 5 to 6, **characterised in that** the orientation lines (8) form an angle of 45° and that each fluid guide element (20) forms an angle of 45° with the direction of rotation.

8. A rotor (1) according to any preceding claim, **characterised in that** the fluid guide elements (20) are curved.

9. A rotor (1) according to any preceding claim, **characterised in that** at least one airfoil (9) is mounted to one of said rotor blades (2).

10. A rotor (1) according to claim 9, **characterised in that** the airfoils are spaced further apart from the hub (3) than the flow elements (4).

11. A rotor (1) according to claims 9 or 10, **characterised in that** the airfoils (9) extend basically parallel to the axis of rotation.

12. A rotor (1) according to any preceding claims 9 to 11, **characterised in that** the airfoils (9) are of asymmetric construction, with its lift force acting in the direction of rotation.

13. A rotor (1) according to any preceding claim, **characterised in that** the rotor blades (2) are bent in direction of rotation.

14. A rotor (1) according to any of claims 9 to 13, **characterised in that** the airfoils (9) comprise flaps or slats.

15. A rotor (1) according to any of the claims 9 to 16, **characterised in that** the airfoils (9) are placed at the free ends of the rotor blades (2).

16. A rotor (1) according to any of claims 9 to 15, **characterised in that** a plurality of airfoils (9) is mounted to one of said rotor blades (2)

17. A rotor (1) according to any preceding claim, **characterised in that** the length of the rotor blades (2) is adjustable.

18. A rotor (1) according to any preceding claim, **characterised in that** the rotor (1) is rotationally symmetric.

19. A rotor (1) according to any preceding claim, **characterised in that** the axis of rotation is vertical.

## Patentansprüche

1. Rotor (1) zum Unwandeln von Wind- oder Wasserenergie in Rotationsenergie, mit
- wenigstens zwei Rotorblättern (2), die mit einem Ende mit einer gemeinsamen Nabe (3) zum Drehen um eine Drehachse verbunden sind,
- wenigstens zwei Strömungselementen (4), die mit der gemeinsamen Nabe (3) und/oder wenigstens einem der Rotorblätter (2) verbunden ist,
- wobei die Strömungselemente (4) U-förmige, hohle Teile sind, die wenigstens eine Öffnung aufweisen, die sich entgegen der Drehrichtung öffnet,
**dadurch gekennzeichnet, dass**
- die Strömungselemente (4) jeweils zwei gegenüberliegende Wände, die an ihren inneren Oberfläche mit wenigstens einem Fluidleitelement (20) verbunden sind, zwei gegenüberliegende Öffnungen (6a, 6b) und eine geschlossenen Seite, die in die Drehrichtung zeigt, umfassen.

2. Rotor (1) nach Anspruch 1, **dadurch gekennzeichnet, dass** mehrere beabstandete Fluidleitelemente (20) in den Strömungselementen (4) angeordnet sind.

3. Rotor (1) nach Anspruch 1 oder 2, **dadurch gekennzeichnet, dass** die Strömungselemente (4) so ausgelegt sind, dass eine auf wenigstens eine, der Drehrichtung entgegengesetzte Seite des Strömungselements (4) eintreffende Strömung eine Scherkraft in der Drehrichtung des Rotors (1) erzeugt.

4. Rotor (1) nach einem der vorhergehenden Ansprüche, **dadurch gekennzeichnet, dass** die Fluidleitelemente (20) streifenförmig mit ersten und zweiten Endabschnitten sind, nach Art einer Jalousie entlang einer geraden Ausrichtungslinie (8) angeordnet sind, an den Strömungselementen (4) mit den ersten und zweiten Endabschnitten befestigt sind und bezüglich der Drehrichtung geneigt sind.

5. Rotor (1) nach einem der vorhergehenden Ansprüche, **dadurch gekennzeichnet, dass** zwei Reihen von nach Art einer Jalousie angeordneten Fluidleitelementen (20) vorgesehen sind, wobei jede Reihe seine gerade Ausrichtungslinie (8) umfasst und die zwei Ausrichtungsreihen (8) einen spitzen Winkel bilden, der in Drehrichtung weist.

6. Rotor (1) nach Anspruch 5, **dadurch gekennzeichnet, dass** zwei Reihen von Fluidleitelementen (20) symmetrisch bezüglich der Drehrichtung angeordnet sind.

7. Rotor (1) nach Anspruch 5 oder 6, **dadurch gekennzeichnet, dass** die Ausrichtungslinien (8) einen Winkel von 45° bilden und dass jedes Fluidleitelement (20) einen Winkel von 45° mit der Drehrichtung bildet.

8. Rotor (1) nach einem der vorhergehenden Ansprüche, **dadurch gekennzeichnet, dass** die Fluidleitelemente (20) gekrümmt sind.

9. Rotor (1) nach einem der vorhergehenden Ansprüche, **dadurch gekennzeichnet, dass** wenigstens ein Tragflügel (9) an einer der Rotorblätter (2) befestigt ist.

10. Rotor (1) nach Anspruch 9, **dadurch gekennzeichnet, dass** die Tragflügel (9) weiter weg von der Nabe (3) angeordnet sind als die Strömungselemente (4).

11. Rotor (1) nach Anspruch 9 oder 10, **dadurch gekennzeichnet, dass** sich die Tragflügel (9) im Wesentlichen parallel zu der Drehachse erstrecken.

12. Rotor (1) nach einem der vorhergehenden Ansprüche 9 bis 11, **dadurch gekennzeichnet, dass** die Tragflächen (9) asymmetrisch aufgebaut sind, wobei ihre Auftriebskraft in der Drehrichtung wirkt.

13. Rotor (1) nach einem der vorhergehenden Ansprüche, **dadurch gekennzeichnet, dass** die Rotorblätter (2) in Drehrichtung gebogen sind.

14. Rotor (1) nach einem der vorhergehenden Ansprüche 9 bis 13, **dadurch gekennzeichnet, dass** die Tragflügel (9) Klappen oder Vorflügel umfassen.

15. Rotor (1) nach einem der vorhergehenden Ansprüche 9 bis 16, **dadurch gekennzeichnet, dass** die Tragflügel (9) an den freien Enden der Rotorblätter (2) angeordnet sind.

16. Rotor (1) nach einem der vorhergehenden Ansprüche 9 bis 15, **dadurch gekennzeichnet, dass** mehrere Tragflügel (9) an einem der Rotorblätter (2) angeordnet sind.

17. Rotor (1) nach einem der vorhergehenden Ansprüche, **dadurch gekennzeichnet, dass** die Länge der Rotorblätter (2) einstellbar ist.

18. Rotor (1) nach einem der vorhergehenden Ansprüche, **dadurch gekennzeichnet, dass** der Rotor (1) rotationssymmetrisch ist.

19. Rotor (1) nach einem der vorhergehenden Ansprüche, **dadurch gekennzeichnet, dass** die Drehachse vertikal ist.

## Revendications

1. Rotor (1) destiné à transformer de l'énergie éolienne hydraulique en énergie rotationnelle, comprenant
- au moins deux pales de rotor (2) raccordées à une extrémité à un moyeu commun (3) pour tourner autour d'un axe de rotation,
- au moins deux éléments d'écoulement (4) raccordés au moyeu commun (3) et/ou à au moins l'une desdites pales de rotor (2),
- les éléments d'écoulement (4) étant des pièces creuses en forme de U dotées d'au moins une ouverture (5) qui s'ouvre de manière opposée au sens de rotation,
**caractérisé en ce que**
- lesdits éléments d'écoulement (4) ont deux parois opposées raccordées au niveau de leur surface interne à au moins un élément de guidage de fluide (20), deux ouvertures latérales opposées (6a, 6b) et un côté fermé pointant dans le sens de rotation.

2. Rotor (1) selon la revendication 1, **caractérisé en ce qu'**une pluralité d'éléments de guidage de fluide espacés les uns des autres (20) est fournie à l'intérieur des éléments d'écoulement (4).

3. Rotor (1) selon la revendication 1 ou 2, **caractérisé en ce que** les éléments d'écoulement (4) sont configurés de sorte qu'un écoulement incident d'au moins un côté de l'élément d'écoulement(4), qui est opposé au sens de rotation, crée une force de cisaillement dans le sens de rotation du rotor (1).

4. Rotor (1) selon l'une quelconque des revendications précédentes, **caractérisé en ce que** lesdits éléments de guidage de fluide (20) sont en forme de bande avec des première et seconde parties d'extrémité, sont agencés comme un déflecteur le long d'une ligne d'orientation droite (8), sont montés sur lesdits éléments d'écoulement (4) avec lesdites première et seconde parties d'extrémité, et sont inclinés par rapport au sens de rotation.

5. Rotor (1) selon l'une quelconque des revendications précédentes, **caractérisé en ce que** deux rangées d'éléments de guidage de fluide agencés comme un déflecteur (20) sont fournies, chaque rangée ayant sa ligne d'orientation droite (8) et lesdites deux lignes d'orientation (8) formant un angle aigu pointant dans le sens de rotation.

6. Rotor (1) selon la revendication 5 précédente, **caractérisé en ce que** les deux rangées d'éléments de guidage de fluide (20) sont agencées symétriquement par rapport au sens de rotation.

7. Rotor (1) selon l'une quelconque des revendications 5 à 6 précédentes, **caractérisé en ce que** les lignes d'orientation (8) forment un angle de 45° et **en ce que** chaque élément de guidage de fluide (20) forme un angle de 45° avec le sens de rotation.

8. Rotor (1) selon l'une quelconque des revendications précédentes, **caractérisé en ce que** les éléments de guidage de fluide (20) sont incurvés.

9. Rotor (1) selon l'une quelconque des revendications précédentes, **caractérisé en ce qu'**au moins une surface portante (9) est montée sur l'une desdites pales de rotor (2).

10. Rotor (1) selon la revendication 9, **caractérisé en ce que** les surfaces portantes sont davantage espacées du moyeu (3) que les éléments d'écoulement (4).

11. Rotor (1) selon la revendication 9 ou 10, **caractérisé en ce que** les surfaces portantes (9) s'étendent essentiellement parallèlement à l'axe de rotation.

12. Rotor (1) selon l'une quelconque des revendications 9 à 11 précédentes, **caractérisé en ce que** les surfaces portantes (9) sont de construction asymétrique, sa composante de portance agissant dans le sens de rotation.

13. Rotor (1) selon l'une quelconque des revendications précédentes, **caractérisé en ce que** les pales de rotor (2) sont courbées dans le sens de rotation.

14. Rotor (1) selon l'une quelconque des revendications 9 à 13, **caractérisé en ce que** les surfaces portantes (9) contiennent des rabats ou volets.

15. Rotor (1) selon l'une quelconque des revendications 9 à 16, **caractérisé en ce que** les surfaces portantes (9) sont placées au niveau des extrémités libres des pales de rotor (2).

16. Rotor (1) selon l'une quelconque des revendications 9 à 15, **caractérisé en ce qu'**une pluralité de surfaces portantes (9) est montée sur l'une desdites pales de rotor (2).

17. Rotor (1) selon l'une quelconque des revendications précédentes, **caractérisé en ce que** la longueur des pales de rotor (2) est réglable.

18. Rotor (1) selon l'une quelconque des revendications précédentes, **caractérisé en ce que** le rotor (1) est symétrique en rotation.

19. Rotor (1) selon l'une quelconque des revendications précédentes, **caractérisé en ce que** l'axe de rotation est vertical.
